# EUROPEAN PATENT APPLICATION

(11) **EP 4 588 847 A1**
(43) Date of publication of application: **23.07.2025**
(21) Application number: 24153059.1
(22) Date of filing: 22.01.2024
(51) Int. Cl.: B65G 1/04, B65G 1/06

(54) **VEHICLE FOR AN AUTOMATED STORAGE AND RETRIEVAL SYSTEM, AUTOMATED STORAGE AND RETRIEVAL SYSTEM AND ASSOCIATED METHOD.**

(71) Applicant: AUTOSTORE TECHNOLOGY AS, 5578 Nedre Vats (NO)
(72) Inventor: NURZYNSKI, Daniel, 5578 Nedre Vats (NO)
(74) Representative: Kilburn & Strode LLP

(57) **Abstract**

Disclosed herein is a vehicle for an automated storage and retrieval system. The vehicle comprises a vehicle chassis. The vehicle chassis comprises a first sub-chassis carrying a first portion of the vehicle apparatus, and a second sub-chassis carrying a second portion of the vehicle apparatus. The second sub-chassis is coupled to the first sub-chassis and is vertically moveable relative to the first sub-chassis. The vehicle further comprises a first plurality of wheels coupled to the first sub-chassis and arranged for movement along a first set of rails which extend in a first direction, a second plurality of wheels coupled to the second sub-chassis and arranged for movement along a second set of rails which extend in a second direction; and a track shift actuator. The track shift actuator is configured to selectively: lift the first sub-chassis relative to the second sub-chassis so as to lift the first portion of the vehicle apparatus and so as to lift the first plurality of wheels above the second plurality of wheels; and lift the second sub-chassis relative to the first sub-chassis so as to lift the second portion of the vehicle apparatus and so as to lift the second plurality of wheels above the first plurality of wheels.

## Description

### TECHNICAL FIELD

The present disclosure relates to vehicle for an automated storage and retrieval system, and to an associated method.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In many systems, the rail system arranged above the grid includes a first plurality of rails extending in a first direction (e.g. X-direction); and a second plurality of rails extending in a second (e.g. Y-direction). Accordingly, robotic container handling vehicles can extend in the first direction along the first plurality of rails, and in the second direction along the second plurality of rails. In order to be able to move in each of the first direction and the second direction, robotic container handling vehicles having dedicated wheels are used. That is to say, a robotic container handling vehicle may comprise a dedicated first plurality of wheels oriented for movement along the first plurality of rails; and a dedicated second plurality of wheels for movement along the second plurality of rails. Accordingly, by lifting the first plurality of wheels above the second plurality of wheels, the vehicle can be moved in the second direction on the second plurality of wheels; by lifting the second plurality of wheels above the first plurality of wheels, the vehicle can be moved in the first direction on the first plurality of wheels; and by allowing both sets of wheels to contact the rails, the vehicle can be securely parked so as to prevent movement in either direction.

When either the first plurality of wheels or the second plurality of wheels are lifted, the entire vehicle weight is supported by the unlifted plurality of wheels. In order to ensure robustness of the robotic container handling vehicle, the wheel lifting mechanisms are structurally reinforced and are operated by lifting motors capable of supporting the full weight of the robotic container handling vehicle.

One or more aspects of the present invention are set out in the appended claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a perspective view of a first sub-chassis according to the present disclosure.;
Fig. 6 shows a first side-view of the first sub-chassis of Fig. 5;
Fig. 7 shows a second side-view of the first sub-chassis of Fig. 5;
Fig. 8 shows a plan view of the first sub-chassis of Fig. 5;
Fig. 9 shows a perspective view of a second sub-chassis according to the present disclosure;
Fig. 10 shows a first side-view of the second sub-chassis of Fig. 9;
Fig. 11 shows a second side-view of the second sub-chassis of Fig. 9;
Fig. 12 shows a plan view of the second sub-chassis of Fig. 9;
Fig. 13 shows a perspective view of a chassis comprising a first sub-chassis according to Fig. 5 and a second sub-chassis according to Fig. 9;
Fig. 14 shows a side-view of the chassis from Fig. 13 in a parked configuration;
Fig. 15 shows a side-view of the chassis from Fig. 13 in a first drive configuration;
Fig. 16 shows a side-view of the chassis from Fig. 13 in a second drive configuration; and
Fig. 17 shows a method according to the present disclosure.

Like reference numerals are used for like components throughout the description.

### DETAILED DESCRIPTION

In overview, the present disclosure relates to a vehicle for an automated storage and retrieval system, including a first plurality of wheels for movement along a first plurality of rails extending in a first direction, and a second plurality of wheels for movement along a second plurality of rails extending in a second direction, wherein the vehicle weight is distributed between the first and second pluralities of wheels, such that a first portion of the vehicle weight is supported by the first plurality of wheels and a second portion of the vehicle weight (e.g. the remaining vehicle weight) is supported by the second plurality of wheels. Accordingly, when the first plurality of wheels is lifted relative to the second plurality of wheels for movement of the vehicle in the second direction on the second plurality of wheels, only the first portion of the vehicle weight has to be lifted. Similarly, when the second plurality of wheels is lifted above the first plurality of wheels for movement of the vehicle in the first direction on the first plurality of wheels, only the second (remaining) portion of the vehicle weight has to be lifted. Accordingly, the full vehicle weight never has to be lifted. Accordingly, relative to vehicles as described in the background section above, less structural reinforcement is required to the vehicle chassis. Furthermore, less structural reinforcement is required to the wheel lifting mechanism, and a smaller lifting motor may be used. As the skilled reader will understand, a chassis is the structure which forms the skeleton of a vehicle. It is the base structure of the vehicle by which the components and the body of the vehicle are supported. In the present disclosure, the wheels are attached directly to the chassis, which is desirable for structural rigidity and robustness.

In practice, the above-described arrangement may be achieved by providing a vehicle chassis which is split into a first sub-chassis attached to the first plurality of wheels; and a second sub-chassis attached to the second plurality of wheels, wherein the first sub-chassis is vertically moveable relative to the second sub-chassis and vice versa. Collectively, the first and second sub-chassis define the skeleton of the vehicle, in that they support the components and the body of the vehicle. Between the first and second sub-chassis, all of the components which are housed within the body of the vehicle, including the body itself, are supported. The wheels are also attached directly to their respective sub-chassis, rather than being attached to auxiliary structures which do not form the skeleton of the vehicle but which are themselves moveable relative to a chassis. Again, this helps to ensure structural rigidity and robustness.

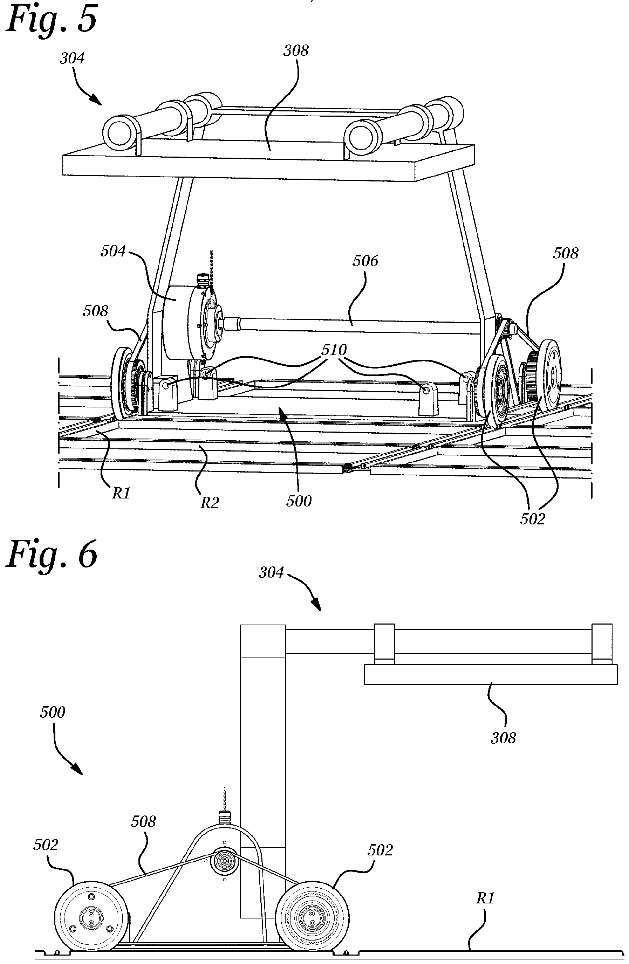

Preferably, the weight distribution between the two chassis is even. In order to ensure as close to 50:50 weight distribution as possible, the vehicle components may be split between each of the first sub-chassis and the second-sub-chassis in such a way that roughly 50% of the vehicle mass is supported by the first sub-chassis and such that the remaining vehicle mass is supported by the second sub-chassis. Where the first sub-chassis supports a gripping device of the vehicle, more than 50% of the vehicle mass, for example at least 55% of the vehicle mass, may be supported by the second chassis. In such examples, no more than 70% of the vehicle mass, for example no more than 60% of the vehicle mass, may be supported the second chassis. This may be achieved by mounting the heaviest individual component(s) of the system, such as the battery and/or the control systems, on the second chassis for support by the second chassis. Accordingly, the weight distribution may be selected to account for the carrying capacity of the gripping device. In Figs. 5-16 and the accompanying description, one exemplary split of componentry between the two sub-chassis for achieving a suitable weight split is described. However, other configurations may be possible. Where the weight split between each sub-chassis is roughly 50:50 (for example between 30:70 and 70:30, or between 40:60 and 60:40), the maximum torque of the track shift motor (described in more detail below) needs not be as high as that of known vehicles.

### Automated storage and retrieval system overview

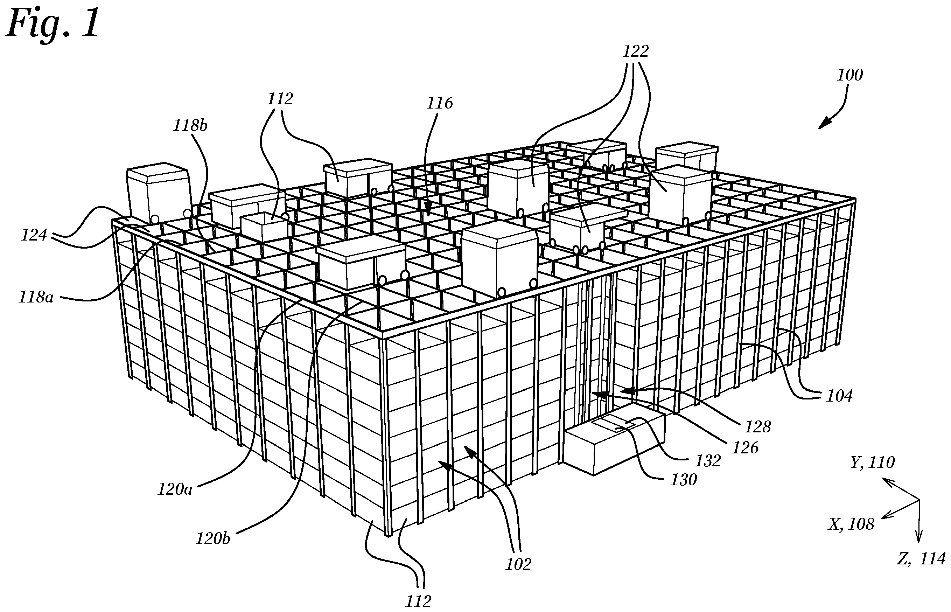

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

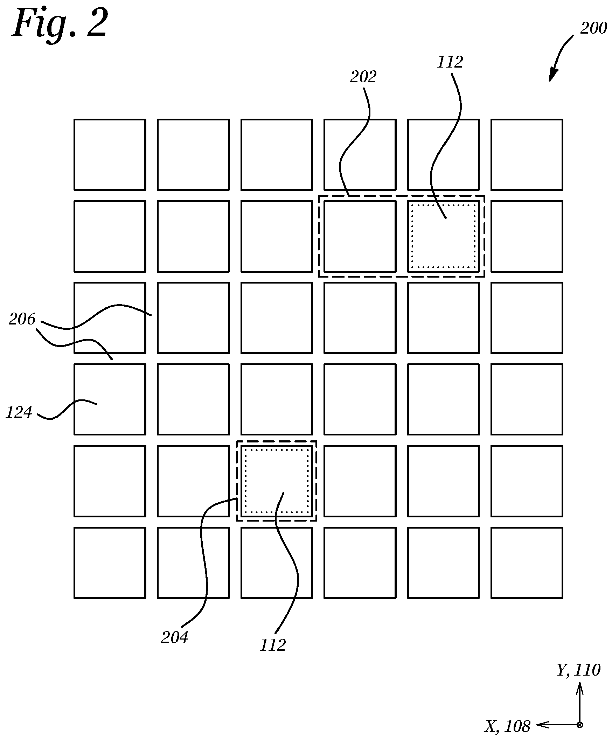

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

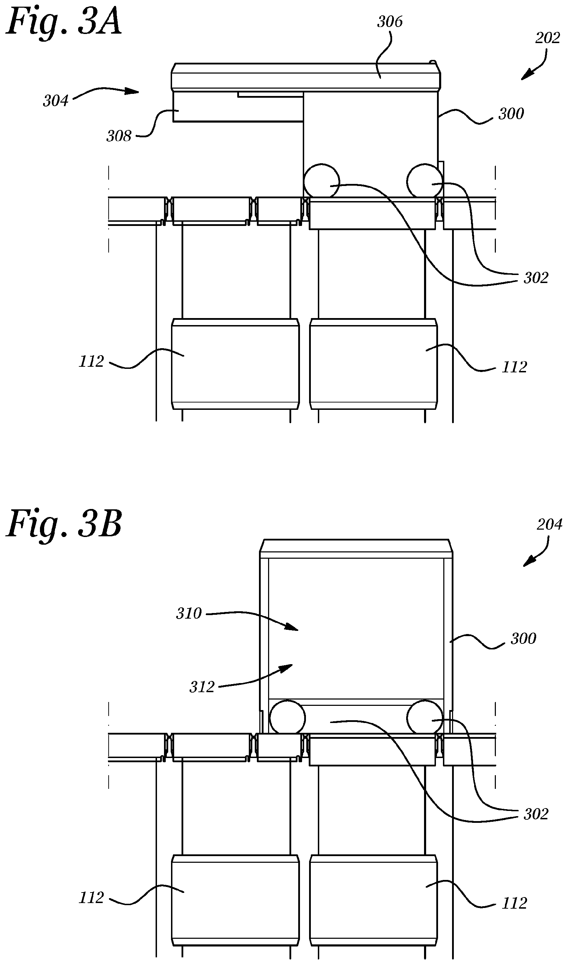

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

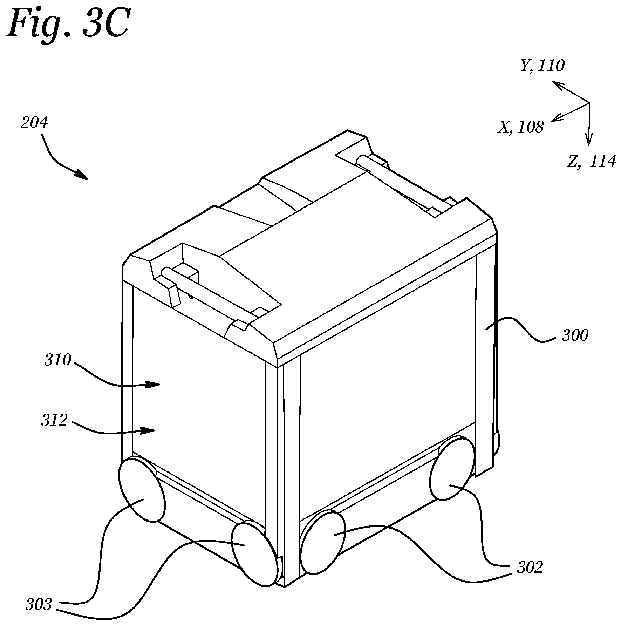

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

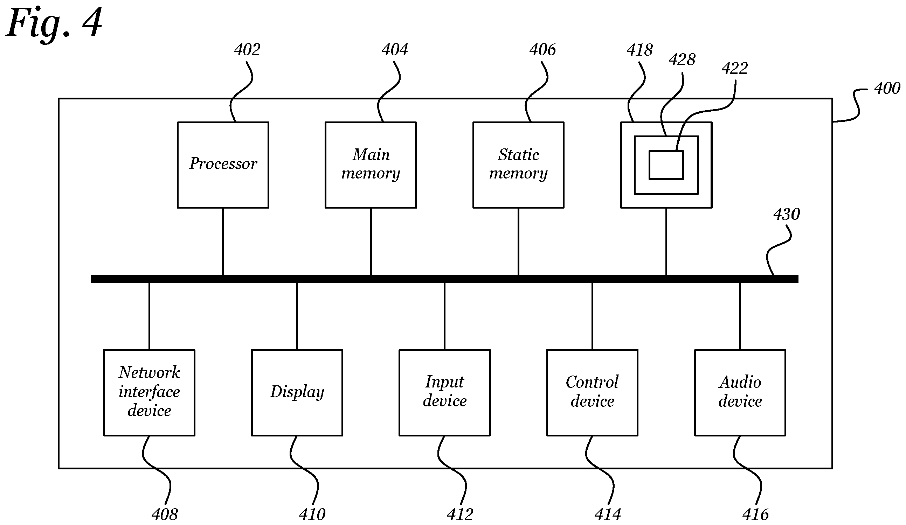

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Split chassis according to the present disclosure

As has been described above, the presently disclosed solution of splitting the vehicle weight between a first plurality of wheels for movement in a first direction, and a second plurality of wheels for movement in a second direction, can be achieved by providing a vehicle which is assembled onto a chassis which comprises a first sub-chassis for carrying a first portion of the vehicle weight, and a second sub-chassis for carrying a second portion of the vehicle weight. Such a split chassis will now be described.

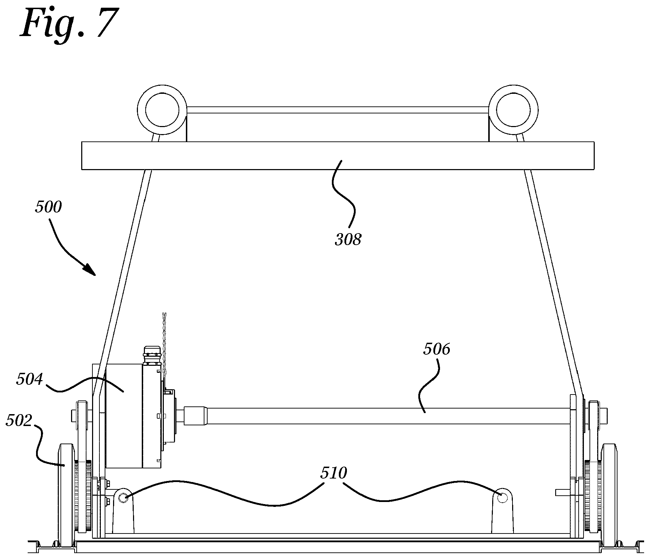

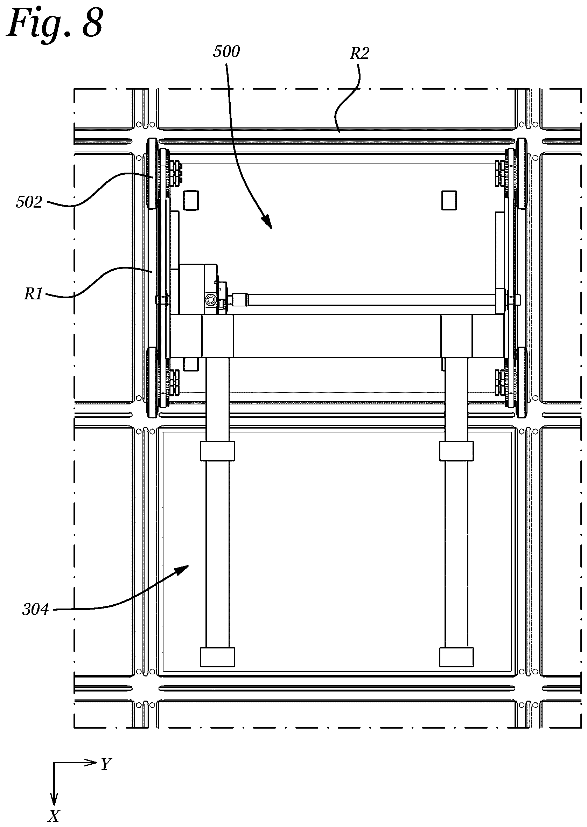

Fig. 5 shows a perspective view of a first sub-chassis 500 according to the present disclosure. Fig. 6 shows a first side-view of the first sub-chassis 500. Fig. 7 shows a second side-view of the first sub-chassis 500. Fig. 8 shows plan view of the first sub-chassis 500.

A first plurality of wheels 502 is attached to the first sub-chassis 500. The first plurality of wheels 502 is provided for movement along a first plurality of rails R1 extending in a first direction (e.g. X-direction, labelled in Fig. 8). In the depicted example, the first plurality of wheels 502 comprises four wheels, for stability. However, fewer than four wheels (e.g. three wheels) or more than four wheels (e.g. five wheels, six wheels, or more than six wheels) may be used. In some examples, each of the four wheels may be driven. Accordingly, the vehicle may be equipped for four-wheel drive in the X-direction. Indeed as shown in Figs. 5-8, a first drive motor 504 is mounted on the first sub-chassis 500. The first drive motor 504 is coupled to each of the wheels 502 by means of a drive shaft 506 and by means of drive belts 508. Because the first drive motor 504 is mounted on the first sub-chassis 500, its weight is supported by the first sub-chassis 500, and by association by the first plurality of wheels 502.

As can be seen from Fig. 7, the drive shaft 506 is located above the axis of rotation of the wheels 502. Accordingly, the drive shaft 506 is positioned such that it does not interfere with lifting of the second sub-chassis 900 relative thereto. Additionally, by using drive belts 508 which extend in the drive direction of the wheels 502 (e.g. as opposed to extending perpendicular to the drive direction), the drive belts 508 also do not interfere with lifting of the second sub-chassis 900 relative to the first sub-chassis 500. In other words, through the provision of a vertically offset drive shaft 506 and front-to-back extending drive belts 508, the first wheels 502 can be lifted relative to the second wheels 902, and the second wheels 902 can similarly be lifted relative to the first wheels 502. Obstructions to selectively lifting the respective sub-chassis are thereby removed.

Also mounted to the first sub-chassis 500 is lifting device 304, which comprises gripping device 308 and a lift actuator (not shown in Figs. 5-8). The lift actuator is typically mounted on the first sub-chassis 500, so that the weight of the first lift actuator is supported by the first sub-chassis. Additionally, because the gripping device 308 is mounted on the firs sub-chassis, the gripping device 308 and any loads suspended therefrom, are supported by the first sub-chassis.

Also shown in Figs. 5-8 are attachment points 510 to which the second chassis attaches, as will be described in more detail below.

In Figs. 5-8, the lifting device 304 is shown as being cantilevered, e.g. such that the vehicle is a first type of robot 202 according to Fig. 3a. However, as the reader will understand, the same split chassis approach could equally be applied to a second type of robot 204 according to Fig. 3b.

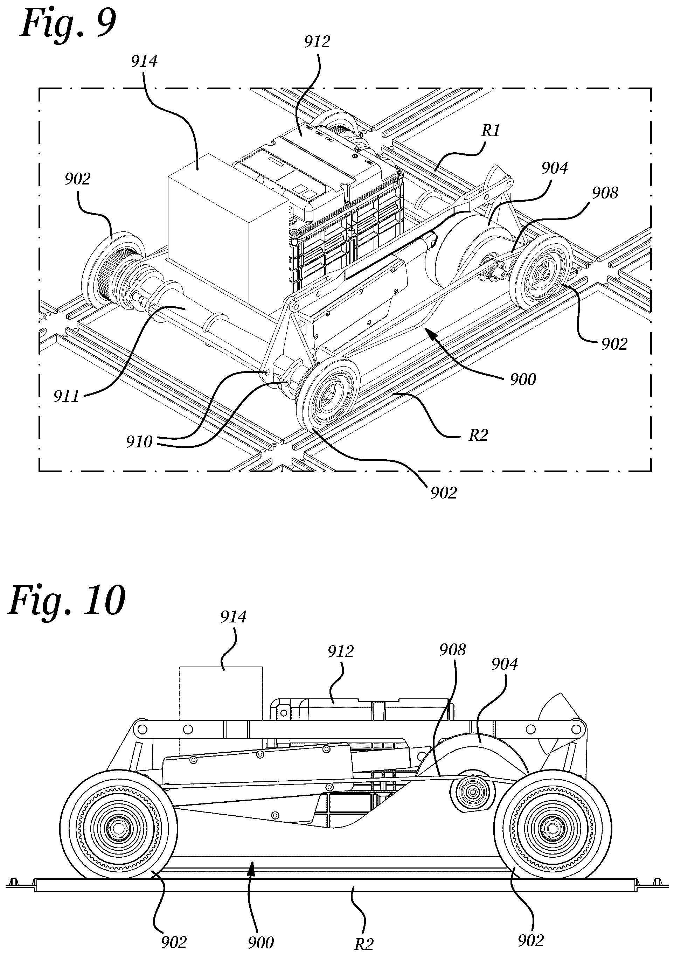

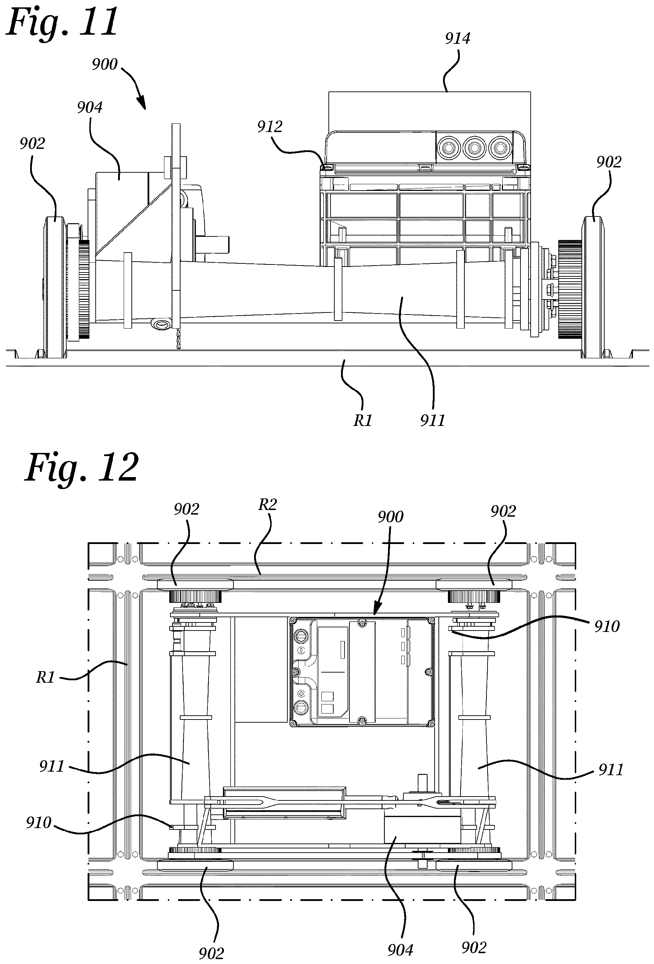

Fig. 9 shows a perspective view of a second sub-chassis 900 according to the present disclosure. Fig. 10 shows a first side-view of the second sub-chassis 900. Fig. 11 shows a second side-view of the second sub-chassis 900. Fig. 12 shows a plan view of the second sub-chassis 900.

A second plurality of wheels 902 is attached to the second sub-chassis 900. The second plurality of wheels 902 is provided for movement along a second plurality of rails R2 extending in a second direction (e.g. Y-direction). In the depicted example, the second plurality of wheels 902 comprises four wheels, for stability. However, fewer than four wheels (e.g. three wheels) or more than four wheels (e.g. five wheels, six wheels, or more than six wheels) may be used. In some example, each of the four wheels may be driven. Accordingly, the vehicle may be equipped for four-wheel drive in the Y-direction. Indeed as shown in Figs. 9-12, a second drive motor 904 is mounted on the second sub-chassis 900. The second drive motor 904 can be coupled to each of the wheels 902 by means of a drive shaft (not shown in Figs. 9-12) and/or by means of drive belts 908. Because the second drive motor 904 is mounted on the second sub-chassis 900, its weight is supported by the second sub-chassis 900, and by association by the second plurality of wheels 902.

Also mounted to the second sub-chassis 900 are a battery 912 and control systems 914. Accordingly, the weight of the battery 912 and of the control systems 914 are supported by the second sub-chassis 900, and by association by the second plurality of wheels 902.

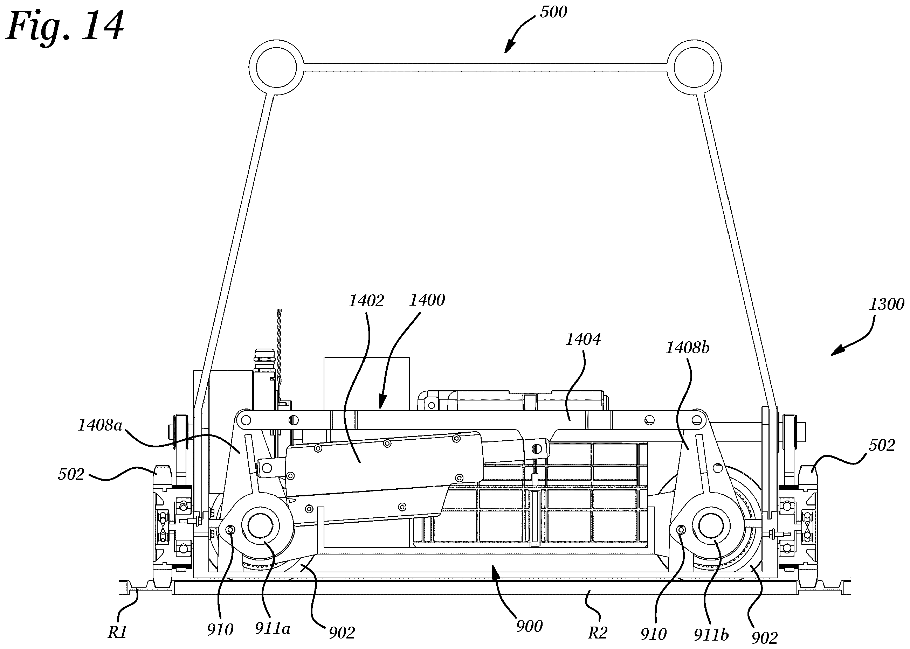

Also shown in Fig. 9 are attachment points 910 to which the first chassis attaches, as will be described in more detail below. More specifically, attachment points 910 of the second sub-chassis 900 attach to attachment points 510 of the first sub-chassis 500. As shown in Fig. 9 and also in Figs. 14-16, the attachment portions 910 are located eccentrically relative to a shaft 911, which itself extends concentrically through the wheels 902 of the second sub-chassis 900. As will be described later, it is this eccentricity of the attachment points 910 relative to the wheels 902 which enables the first sub-chassis 500 to be lifted relative to the second sub-chassis 900, and vice versa.

As the reader will understand, the above is just one exemplary embodiment. Components mounted on the second chassis 900 may be moved to be mounted on the first chassis 500, or vice versa, in order to achieve the required weight distribution between the two sub-chassis.

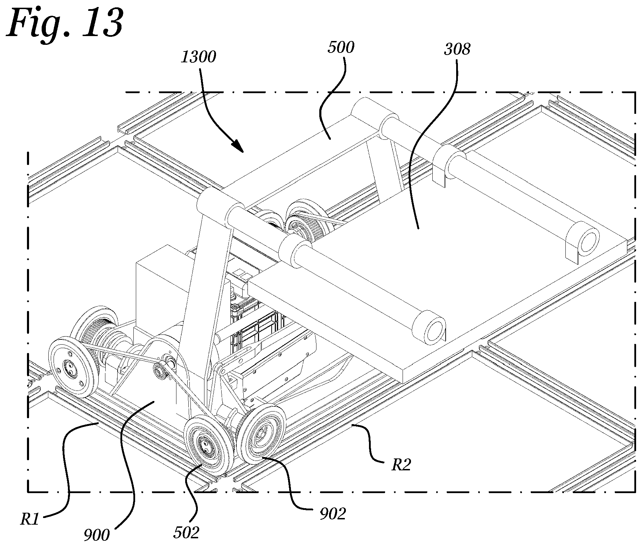

Fig. 13 shows an assembled view of the vehicle chassis 1300, which comprises the first sub-chassis 500 coupled to the second sub-chassis 900. As can be seen, the first wheels 502 are oriented for movement in the X-direction on rails R1; and second wheels 902 are oriented for movement in the Y-direction on rails R2. That is, the respective pluralities of wheels are oriented for movement in respective perpendicular directions. Lifting of the first and second sub-chassis will now be described.

### Track shift actuation

As can be seen from Fig. 13, when both the first plurality of wheels 502 and the second plurality of wheels 902 contact the respective rails R1 and R2, neither direction of movement is possible. In particular, movement in the X direction along rails R1 is prevented by the second plurality of wheels 902; and movement in the Y direction along rails R2 is prevented by the first plurality of wheels 502. This is therefore defined in the present disclosure as a parked configuration of the vehicle.

In order to enable movement in the X direction along rails R1, the second wheels 902 must be lifted. In order to achieve this, the second sub-chassis 900 is lifted such that the second wheels 902 are lifted relative to the first wheels 502 and such that the second wheels 902 clear the second rails R2. Similarly, in order to enable movement in the Y direction along rails R2, the first wheels 502 must be lifted. In order to achieve this, the first sub-chassis 500 is lifted such that the first wheels 502 are lifted relative to the first wheels 902 and such that the first wheels 502 clear the first rails R1. The process of lifting the first sub-chassis for movement of the vehicle in the second direction; and lifting the second sub-chassis for movement of the vehicle in the first direction, is referred to herein as track shifting.

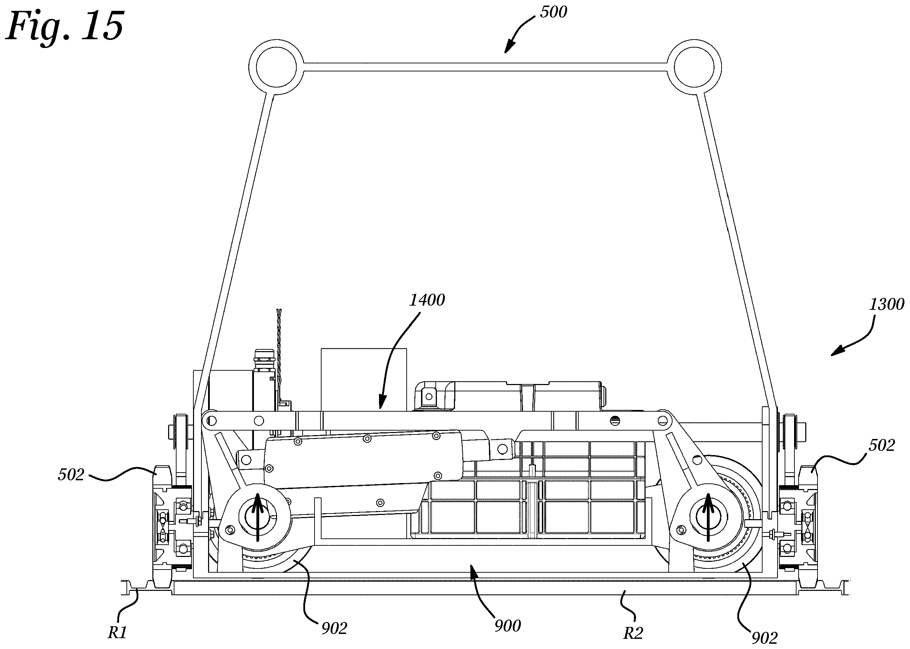

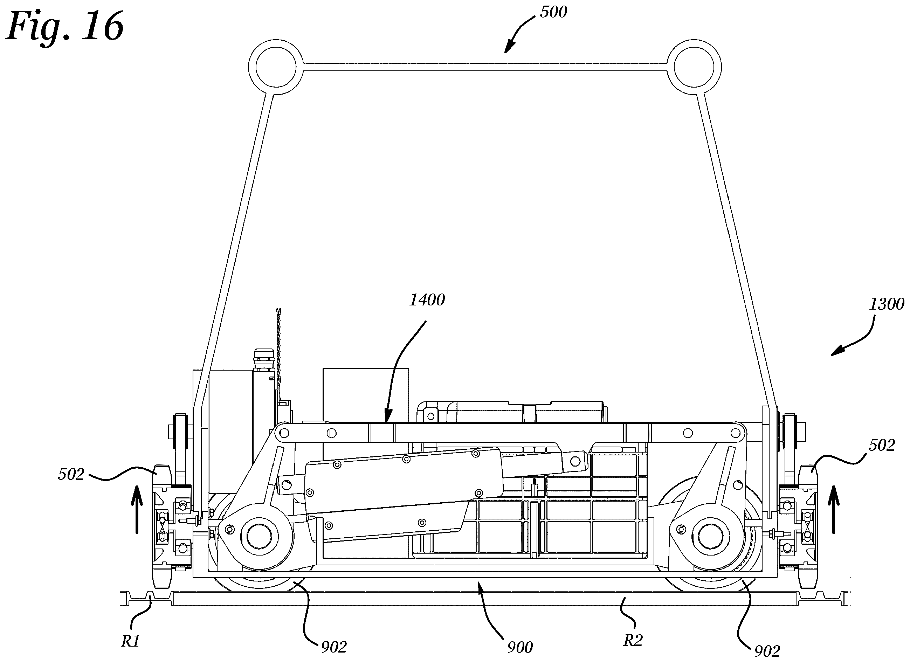

Figs. 14, 15 and 16 show a cross-sectional side-view of the vehicle chassis 1300 according to Fig. 13, and show also a track shift actuator 1400 according to the present disclosure. The track shift actuator 1400 is configured to selectively lift the first sub-chassis 500 or the second sub-chassis 900, thereby performing track shifting of the vehicle. More specifically, Fig. 14 shows the vehicle in the parked configuration, in which both pluralities of wheels contact their respective rails. Fig. 15 shows the vehicle in a first drive configuration for driving in the X direction along rails R1. As shown in Fig. 15, the second sub-chassis 900, and hence the second wheels 902, are lifted above the rails R2. Fig. 16 shows the vehicle in a second drive configuration for driving in the Y direction along rails R2. As shown in Fig. 16, the first sub-chassis 500, and hence the first wheels 502, are lifted above the rails R1.

As shown in Figs. 14, 15 and 15, the track shift actuator 1400 comprises a linear actuator 1402 which acts upon a lift linkage 1404. The lift linkage 1404 couples to first and second actuator arms 1408a, 1408b, which in turn are coupled to a first shaft 911a and to a second shaft 911b. The first and second shafts 911a, 911b extend concentrically through the second wheels 902, such that rotation of the first and second shafts 911a, 911b does not alter the height of the wheels 902 relative to the second sub-chassis. However, the shafts 911a, 911b comprise attachment points 910 which are positioned eccentrically along the shafts 911a, 911b. Accordingly, as the shafts 911a, 911b rotate, the height of the attachment points 910 change relative to the second wheels 902. Moreover, thanks to the use of the linkage bar 1406, the movements of the attachment points 910 relative to the second sub-chassis 900 are coordinated. Finally, because the first sub-chassis 500 attaches to the second sub-chassis 900 at the attachment points 910 (via attachment points 510), rotation of the shafts 911a, 911b alters the height of the first sub-chassis 500 relative to the second wheels 902. In short, therefore, by rotating the shafts 911a, 911b in a first direction (e.g. counter-clockwise from the Fig. 14 configuration to the Fig. 15 configuration), the second sub-chassis 900 can be lifted above the first sub-chassis 500; and by rotating the shafts 911a, 911b in a second direction (e.g. clockwise from the Fig. 14 configuration to the Fig. 16 configuration), the first sub-chassis 500 can be lifted above the second sub-chassis 900.

As the reader will understand, the mechanical linkage shown in Figs. 14-16 is just one possible example which could be used to operate lifting of the respective sub-chassis. In particular, in another example, a rotary actuator, for example a servo motor, could be used in place of the linear actuator 1402.

As can be seen from Figs. 14-16, the track shifting mechanism is mounted on the second sub-chassis 900. Accordingly, its weight is supported by the second sub-chassis 900. This may help to further balance out weights, where the lifting mechanism is mounted on the first sub-chassis 500.

### Track shift operation

We will now describe an example method of operating the track shift as described herein. As the reader will understand, the method may be performed by the control systems 914.

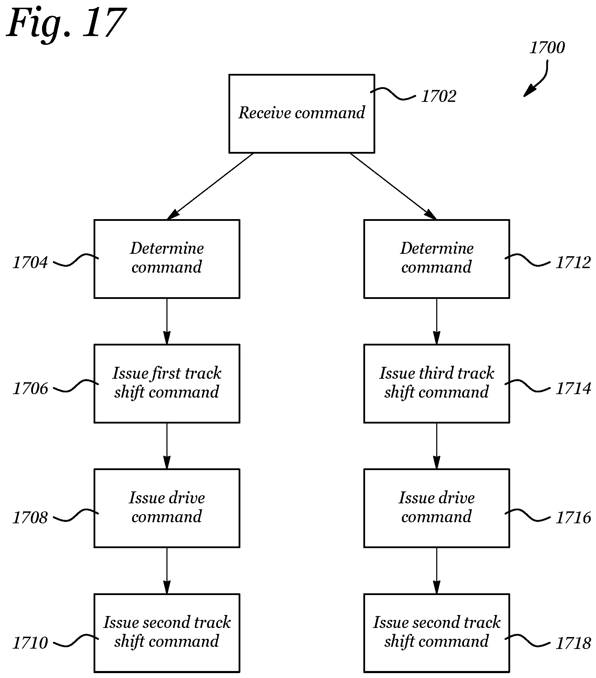

Fig. 17 shows a method 1700 according to the present disclosure.

At step 1702, a command is received for movement of the vehicle. The command may be received from a central control centre. It may be received wirelessly.

At step 1704, it is determined that the command is for movement in the X-direction;

At step 1706, a first track shift command is issued to cause the track shift actuator to lift the second sub-chassis above the first sub-chassis (e.g. move from the Fig. 14 configuration to the Fig. 15 configuration);

At step 1708, a drive command is issued to the first drive motor 504 to cause the first drive motor to move the vehicle a first distance along the first rails R1; and

At step 1710, once the vehicle has travelled the first distance along the first rails R1, a second track shift command is issued to cause the track shift actuator to return the vehicle to the parked configuration (as shown in Fig. 14).

At step 1712, it is determined that the command is for movement in the Y-direction;

At step 1714, a third track shift command is issued to cause the track shift actuator to lift the first sub-chassis above the second sub-chassis (e.g. move from the Fig. 14 configuration to the Fig. 16 configuration);

At step 1716, a drive command is issued to the second drive motor 904 to cause the second drive motor to move the vehicle a second distance along the second rails R2; and

At step 1718, once the vehicle has travelled the second distance along the second rails R2, a second track shift command is issued to cause the track shift actuator to return the vehicle to the parked configuration (as shown in Fig. 14).

At each of steps 7110 and 1718, the method may then enter a listening state in which it listens for a new command which would return the method to step 1702.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A vehicle for an automated storage and retrieval system, the vehicle comprising:
a vehicle chassis, the vehicle chassis comprising:
a first sub-chassis carrying a first portion of the vehicle apparatus; and
a second sub-chassis carrying a second portion of the vehicle apparatus;
wherein the second sub-chassis is coupled to the first sub-chassis and is vertically moveable relative to the first sub-chassis;
a first plurality of wheels coupled to the first sub-chassis and arranged for movement along a first set of rails which extend in a first direction;
a second plurality of wheels coupled to the second sub-chassis and arranged for movement along a second set of rails which extend in a second direction; and
a track shift actuator configured to selectively:
lift the first sub-chassis relative to the second sub-chassis so as to lift the first portion of the vehicle apparatus and so as to lift the first plurality of wheels above the second plurality of wheels; and
lift the second sub-chassis relative to the first sub-chassis so as to lift the second portion of the vehicle apparatus and so as to lift the second plurality of wheels above the first plurality of wheels.

2. The vehicle of claim 1, wherein the first sub-chassis carries between 30% and 70% of the vehicle mass, and wherein the second sub-chassis carries the remaining vehicle mass.

3. The vehicle of claim 1, wherein the first sub-chassis carries between 40% and 60% of the vehicle mass, and wherein the second sub-chassis carries the remaining vehicle mass.

4. The vehicle of any preceding claim, wherein the second sub-chassis carries greater than 50% of the vehicle mass, for example greater than 55% of the vehicle mass, and wherein the first sub-chassis carries a gripping device for lifting and lowering a payload relative to the vehicle.

5. The vehicle of any preceding claim, further comprising a first drive motor for driving the first plurality of wheels, and a second drive motor for driving the second plurality of wheels, wherein the first drive motor is carried by the first sub-chassis, and wherein the second drive motor is carried by the second sub-chassis.

6. The vehicle of any preceding claim, further comprising:
a gripping device for lifting and lowering a payload relative to the vehicle; and one or both of:
a battery cradle for carrying a vehicle battery; and
control electronics for operating the vehicle;
wherein the gripping device is carried by the first sub-chassis, and the battery cradle and/or control electronics are carried by the second sub-chassis.

7. The vehicle of any preceding claim, wherein the first sub-chassis is coupled to the second sub-chassis by an eccentric shaft, and wherein rotation of the eccentric shaft causes vertical movement of the first sub-chassis relative to the second sub-chassis;
optionally wherein the track shift actuator is configured to rotate the eccentric shaft so as to selectively lift and lower the first sub-chassis relative to the second sub-chassis.

8. The vehicle of any preceding claim, wherein the track shift actuator comprises one of a linear actuator and a servo motor.

9. The vehicle of any preceding claim, wherein each of the first plurality of wheels is driven.

10. The vehicle of any preceding claim, wherein each of the second plurality of wheels is driven.

11. The vehicle of any preceding claim, wherein the track shift actuator is operable between a first configuration in which the first sub-chassis is lifted relative to the second sub-chassis such that the first plurality of wheels are lifted above the second plurality of wheels; a second configuration in which the second sub-chassis is lifted above to the first sub-chassis such that the second plurality of wheels are lifted above the first plurality of wheels; and a third configuration in which the first and second pluralities of wheels are level with one another;
the vehicle optionally further comprising a drive control unit configured to cause the track shift actuator to move to the first configuration for vehicle movement in the second direction; and configured to cause the track shift actuator to move to the second configuration for vehicle movement in the first direction; and configured to cause the track shift actuator to move to the third configuration for vehicle parking.

12. An automated storage and retrieval system comprising a storage grid and at least one vehicle according to any preceding claim, the storage grid comprising a first set of rails which extend in a first direction and a second set of rails which extend in a second direction, and wherein the at least one vehicle is configured for movement along the first set of rails or along the second set of rails.

13. A method of operating a vehicle according to any preceding claim, the method comprising:
receiving an instruction to drive the vehicle in one of the first direction and the second direction;
responsive to receiving the instruction, causing the track shift actuator to:
lift the first sub-chassis when the instruction is to drive the vehicle in the second direction; or
lift the second sub-chassis when the instruction is to drive the vehicle in the first direction.

14. The method of claim 13, further comprising:
responsive to determining that the vehicle has arrived at a target location, causing the track shift actuator to return the chassis to a parked configuration in which the first plurality of wheels is level with the second plurality of wheels.

15. A computer-readable medium comprising instructions which, when executed by a processor of a device, cause the device to perform the method of claim 13 or claim 14.
